# FASCICULE DE BREVET EUROPEEN

(11) **EP 1 605 242 B1**
(45) Date de publication et mention de la délivrance du brevet: **09.07.2008**
(21) Numéro de dépôt: 05290976.9
(22) Date de dépôt: 04.05.2005
(51) Int. Cl.: G01N 1/08, E21B 49/02, E21B 11/00

(54) **Système pour l'utilisation d'un dispositif de prélèvement d'échantillons dans un sol ou un matériau de constitution granuleuse ou pulvérulente**
System zur Benutzung einer Vorrichtung zum Entnehmen einer Probe aus dem Grund oder eines körnigen oder pulverförmigen Materials
System for the use of an apparatus for taking samples in the ground or a granular or pulverulent material

(30) Priorité: 17.05.2004 FR 0405367
(43) Date de publication de la demande: 14.12.2005
(73) Titulaire: Agro-Systemes S.A., 37390 La Membrolle sur Choisille (FR)
(72) Inventeur: Garel, Bertrand, 37390 La Membrolle sur Choisille (FR)
(74) Mandataire: Debay, Yves

(56) Documents cités:
- WO-A-01/92847
- FR-A- 2 562 665
- FR-A- 2 702 563
- FR-A- 2 845 305
- NL-A- 9 002 000
- US-A- 5 435 399
- US-B1- 6 237 429

## Description

La présente invention concerne un système pour l'utilisation d'un dispositif de prélèvement d'échantillons dans un sol ou un matériau de constitution granuleuse ou pulvérulente, tel qu'une tarière pour prélever des carottes sur une certaine hauteur de sol.

Il est connu dans l'art antérieur, par le document WO 01/92 847, un dispositif de prélèvement d'échantillons dans un matériau de constitution granuleuse ou pulvérulente, constitué d'une tige dans laquelle est creusé un canal de recueil du matériau à prélever. Une lèvre de raclage est formée le long du canal. Elle permet, par rotation du dispositif grâce à un volant situé à l'extrémité supérieure de la tige, de recueillir le matériau dans le canal. La tige est munie, à son extrémité inférieure, d'une ogive permettant la pénétration du dispositif dans le sol.

D'autres appareils de prélèvement sont également connus par les documents FR 2 562 665 et FR 2 702 563. Ces appareils ne permettent pas de réaliser un prélèvement par rotation d'une lèvre de raclage, une fois que la tige est enfoncée.

II est connu, par les documents WO 01/92 847 et FR 2 845 305, d'utiliser un marteau coopérant avec un organe mâle ou femelle du dispositif de prélèvement d'échantillons, cet organe étant disposé au-dessus de la tige, pour aider l'utilisateur du dispositif à enfoncer ce dernier dans le sol ou le matériau à prélever.

Toutefois, ce type de dispositifs de prélèvement d'échantillons doit être enfoncé dans le sol ou le matériau à prélever et retiré du sol ou matériau en étant maintenu bien verticalement. Si ce n'est pas le cas, par exemple dans le cas d'une utilisation par un novice, la tige risque de se tordre et de rendre le dispositif de prélèvement d'échantillons inutilisable.

Le document US 6 237 429 divulgue un dispositif de prélèvement pouvant être fixé à un véhicule et dont la tige est accrochée à un support par un élément à boulon transversal, au niveau de fentes en forme de chevrons recevant les extrémités de cet élément. Par un coulissement de l'élément à boulon dans les fentes, la tige peut être décalée et rehaussée pour être solidarisée à un marteau rotatif. Ce dernier permet d'enfoncer la tige dans le sol et est aussitôt stoppé lorsque la fente de prélèvement n'est plus visible.

Le support est monté sur un mât par l'intermédiaire de glissières du mât, ce qui permet un déplacement en translation du support par rapport au mât ou inversement. Un treuil est prévu sur le mât pour remonter simultanément le support et la tige. Avant de réaliser la remontée, il faut préalablement abaisser le mât à l'aide du treuil, jusqu'à ce que la base du mât touche le sol. Le mât a en effet un degré de mobilité en translation relativement à l'ensemble support - tige planté dans le sol. Ensuite, alors que le mât est posé sur le sol et ne peut donc plus descendre, le treuil peut servir à remonter l'ensemble support -tige le long du mât. Avec ce type de dispositif, un maintien vertical de la tige est assuré. Cependant, aucune rotation de la tige n'est permise puisque la tige est maintenue droite par l'élément transversal à boulon calé dans des fentes. Ce type de dispositif est donc inadapté pour des tarières du type décrit dans la demande WO 01/92 847, exigeant une rotation une fois la tige enfoncée.

La présente invention a pour but de pallier certains inconvénients de l'art antérieur en proposant un système pour l'utilisation de dispositifs de prélèvement d'échantillons qui permette d'enfoncer ces dispositifs de prélèvement d'échantillons dans un sol ou un matériau et de les en retirer sans risque d'endommagement du dispositif et avec un minimum d'effort pour l'utilisateur.

Ce but est atteint par un système pour l'utilisation d'un dispositif de prélèvement d'échantillons dans un sol ou un matériau de constitution granuleuse ou pulvérulente, ledit dispositif comprenant une tige sensiblement verticale munie d'une rainure destinée à recueillir le prélèvement, sur le bord de laquelle est formée une lèvre de raclage du sol ou du matériau à prélever, système dans lequel au moins un premier système motorisé est prévu pour entraîner la descente du dispositif de prélèvement dans le sol ou le matériau à prélever, caractérisé en ce qu'il comprend des moyens de guidage vertical du dispositif de prélèvement lors de cette descente, laissant un degré de liberté en rotation à la tige autour de son axe, et un second système motorisé pour entraîner la rotation du dispositif de prélèvement dans le sol ou le matériau à prélever permettant le raclage du sol ou matériau à prélever par la lèvre de raclage du dispositif de prélèvement et le recueil du sol ou matériau raclé dans la rainure du dispositif de prélèvement, lesdits premier et second systèmes motorisés étant prévus au-dessus de la tige.

Selon d'autres particularités, le système est tel que défini dans les revendications 2 à 12.

Un autre but de l'invention est de proposer un procédé de mise en oeuvre du système selon l'invention.

Ce but est atteint par le procédé, caractérisé en ce qu'il comprend au moins les étapes suivantes :
- positionnement vertical du système à l'endroit où un prélèvement doit être effectué,
- descente verticale du dispositif de prélèvement dans le sol ou le matériau à prélever grâce au système motorisé de descente du dispositif de prélèvement, au maximum jusqu'à ce que la rainure de la tige du dispositif de prélèvement soit complètement enfoncée dans le sol ou matériau, un maintien vertical étant assuré par des moyens de guidage vertical du système à la fois au ras du sol et à un niveau supérieur,
- après la descente, rotation du dispositif de prélèvement grâce au système motorisé de rotation du dispositif de prélèvement, de façon à prélever des échantillons grâce à la lèvre de raclage et à les recueillir dans la rainure du dispositif de prélèvement,
- remontée du dispositif de prélèvement par actionnement de la manivelle ou dispositif mécanique équivalent jusqu'à ce que la tête du dispositif de prélèvement soit entièrement sortie du sol ou matériau,
- extraction du prélèvement effectué de la rainure à l'aide d'un outil adapté et stockage dans un récipient prévu à cet effet.

Selon d'autres particularités, le procédé est tel que défini dans les revendications 14 et 15.

D'autres particularités et avantages de la présente invention apparaîtront plus clairement à la lecture de la description ci-après, faite en référence aux dessins annexés, dans lesquels :
- la figure 1 représente une vue de profil du système selon l'invention,
- la figure 2 représente une vue de face du système selon l'invention,
- la figure 3 représente une vue de détail en coupe de la liaison entre le système selon l'invention et un dispositif de prélèvement d'échantillons,
- la figure 4 représente la partie inférieure d'un dispositif de prélèvement d'échantillons partiellement enfoncé dans un sol.

Le système pour l'utilisation de dispositifs de prélèvement d'échantillons dans un sol ou un matériau de constitution granuleuse ou pulvérulente selon l'invention est constitué d'une potence (1) sur laquelle est fixée une crémaillère (2) le long de laquelle peut coulisser un dispositif (3) de support d'un bloc burineur / outil rotatif (4), lequel dispositif de support (3) supportant également le dispositif (5) de prélèvement d'échantillons. En variante la crémaillère peut être remplacée par un organe d'entraînement équivalent, par exemple un treuil apte à coulisser le long de la potence (1).

La potence (1) est constituée d'une barre sensiblement verticale (10) à l'extrémité supérieure de laquelle sont fixées, par exemple en y étant soudées, deux barres sensiblement horizontales (11), parallèles entre elles et espacées l'une de l'autre d'une distance équivalente à la largeur de la crémaillère (2). Une plaque sensiblement horizontale (12) est fixée, par exemple en y étant soudée, à l'extrémité inférieure de la barre verticale (10) de la potence (1), de façon à former un « L » avec cette dernière.

La crémaillère (2) est constituée d'une barre (20) de section sensiblement rectangulaire, munie sur au moins une de ses faces d'une pluralité de dents (21) sensiblement horizontales disposées les unes au-dessus des autres sur toute la hauteur de ladite barre (20) de section rectangulaire. Les dents (21) sont espacées les unes des autres d'une distance constante. Une plaque sensiblement horizontale (22) est fixée, par exemple en y étant soudée, à l'extrémité inférieure de la barre (20) de section rectangulaire.

La barre (20) de section rectangulaire de la crémaillère (2) est disposée parallèlement à la barre verticale (10) de la potence (1), la plaque (22) de la crémaillère (2) prenant appui sur la plaque (12) de la potence (1) et l'extrémité supérieure de la crémaillère (2) étant introduite entre les deux barres horizontales (11) parallèles entre elles de la potence (1). La plaque (22) de la crémaillère (2) est rendue solidaire de la plaque (12) de la potence (1) par vissage d'au moins deux vis (13) pénétrant chacune à la fois dans un perçage réalisé dans la plaque (22) de la crémaillère (2) et dans un taraudage de la plaque (12) de la potence (1). L'extrémité supérieure de la crémaillère (2) est fixée aux barres horizontales (11) de la potence (1) au moyen d'une goupille (14) ou élément équivalent traversant à la fois un perçage réalisé dans la largeur de la barre (20) de section rectangulaire de la crémaillère (2) et deux perçages réalisés chacun dans l'épaisseur de chacune des barres horizontales (11) de la potence (1).

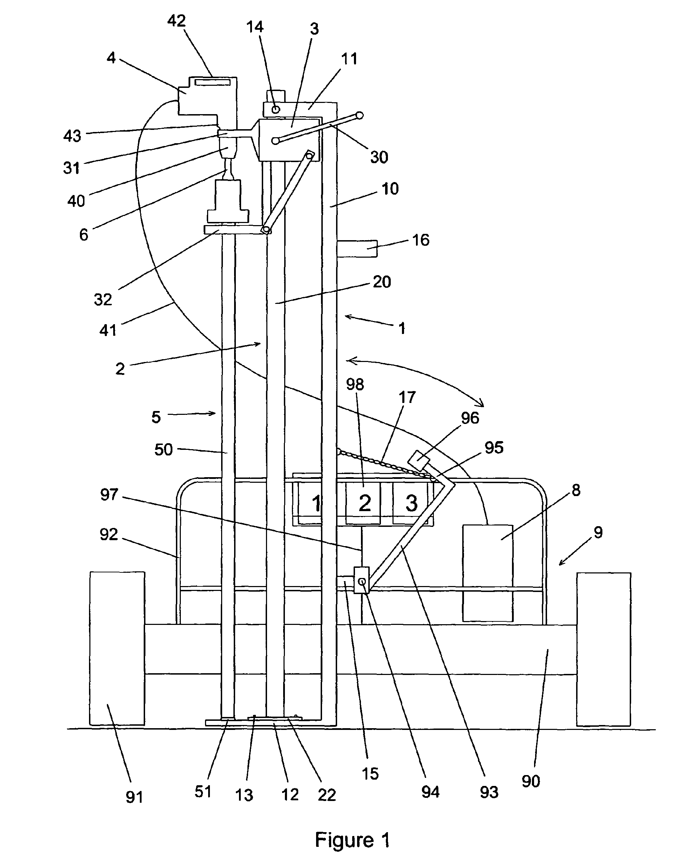

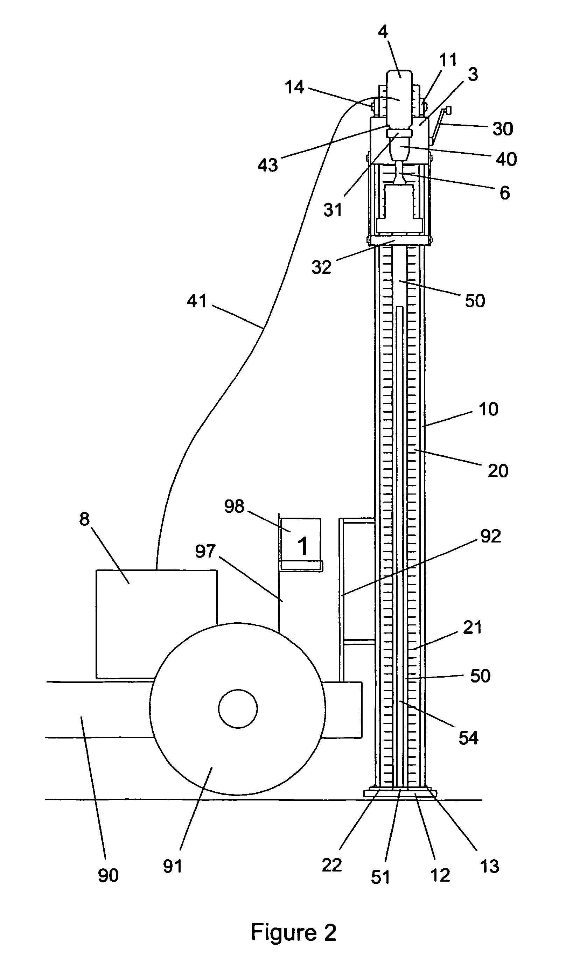

Le dispositif de support (3) est monté mobile en translation sur la crémaillère (2). Il comporte au moins un pignon (non représenté) engrenant sur les dents (21) de la crémaillère (2) et relié à une manivelle (30). Une telle manivelle est par exemple actionnable par un utilisateur du système selon l'invention pour remonter ou pour descendre le dispositif de prélèvement (5). Dans un mode de réalisation de l'invention, l'actionnement de la manivelle (30) peut déclencher un système mécanique de type perceuse, ce qui permet de faciliter la remontée ou la descente du dispositif de support (3). Une bague (31) sensiblement horizontale est fixée au dispositif de support (3), de préférence dans l'alignement de la potence (1) et de la crémaillère (2), comme représenté sur les figures 1 et 2. Cette bague (31) supporte le bloc burineur / outil rotatif (4). Une plaque sensiblement horizontale (32) est fixée sur le dispositif de support (3). Cette plaque (32) est munie d'un perçage traversant (320) situé sensiblement dans l'axe de la bague (31) du dispositif de support (3).

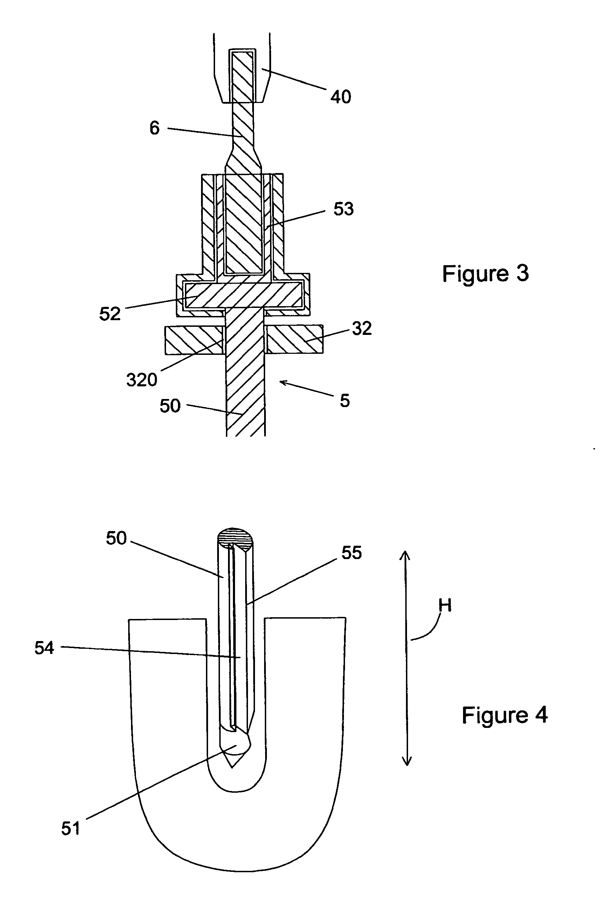

Le dispositif de prélèvement (5) à utiliser avec le système selon l'invention doit comporter une tige verticale (50) à l'extrémité inférieure de laquelle est fixée, par exemple en y étant vissée, une tête (51) visible en particulier sur la figure 4, ladite tête (51) permettant l'enfoncement avec un minimum de frottements du dispositif de prélèvement dans le sol ou le matériau à prélever. La tige (50) s'étend entre son extrémité inférieure et son extrémité supérieure sur une hauteur (H) comprise entre 20 et 120 cm, de sorte qu'il est permis de prélever un sol ou un matériau à une grande profondeur. La tête (51) du dispositif de prélèvement (5) a de préférence une forme d'ogive, dont le diamètre est à adapter en fonction de la composition et du degré d'humidité du sol ou du matériau à prélever. La tige (50) du dispositif de prélèvement (5) est soudée, à son extrémité supérieure, à un disque sensiblement horizontal (52), de diamètre plus important que celui de la tige (50). Un élément femelle (53), d'axe de symétrie confondu avec celui de la tige (50), est soudé au-dessus du disque (52). Cet élément femelle (53) est muni, en son centre, d'un évidement de section non cylindrique, par exemple carrée, prévu pour accueillir un manchon (6) de section inférieure complémentaire à l'évidement, ce manchon (6) étant fixé de façon amovible au bloc burineur / outil rotatif (4). Dans une variante de réalisation, l'élément femelle (53) est remplacé par un élément mâle de section non cylindrique, par exemple carrée, et l'extrémité inférieure du manchon (6) est remplacée par un élément femelle muni, en son centre, d'un évidement de section non cylindrique, par exemple carrée, complémentaire de l'élément mâle.

La tige (50) du dispositif de prélèvement (5) est introduite dans le perçage (320, figure 3) de la plaque (32) du dispositif de support (3). Le diamètre du disque (52) du dispositif de prélèvement (5) étant supérieur au diamètre du perçage (320) de la plaque (32) du dispositif de support (3), le disque (52) prend appui sur la plaque (32). Un élément d'amortissement (non représenté), de préférence en plastique, est prévu à l'extrémité supérieure du dispositif de prélèvement (5), positionné autour du disque (52) et de l'élément femelle (53) représentés à la figure 3, de façon à éviter les contacts métal-métal entre le disque (52) du dispositif de prélèvement et la plaque (32) du dispositif de support (3) et à amortir les chocs de l'un contre l'autre lors de l'utilisation du système selon l'invention, en particulier lors de la descente du dispositif de prélèvement dans le sol ou le matériau à prélever.

L'extrémité inférieure de la tige (50) traverse un perçage réalisé dans la plaque (12) de la potence (1), ledit perçage étant situé dans l'axe de la bague (31) du dispositif de support (3) et dans celui du perçage (320) de la plaque (32) du dispositif de support (3). De cette façon, la tige (50) du dispositif de prélèvement (5) est guidée verticalement par trois points dans sa descente et sa remontée, ce qui permet de ne pas risquer de l'endommager, en la tordant par exemple.

La tige (50) du dispositif de prélèvement (5) comporte une rainure (54) sur la majeure partie de la longueur de la tige (50). La rainure (54) comporte trois faces sensiblement perpendiculaires entre elles formant un canal. Les deux faces parallèles ne sont pas de la même largeur, formant ainsi une partie saillante (55) qui constitue une lèvre de raclage permettant de racler la terre entourant le dispositif de prélèvement (5) lorsque ce dernier est enfoncé dans le sol et mis en rotation à l'aide du bloc burineur / outil rotatif (4). Les matériaux qui s'accumulent dans la rainure (54) du dispositif de prélèvement (5) constituent le prélèvement d'échantillon, qui est récupéré après que le dispositif de prélèvement (5) a été retiré du sol. Dans un mode de réalisation de l'invention, la rainure (54) est équipée d'un élément profilé (non représenté) fixé de manière amovible dans le canal pour recueillir le prélèvement. L'élément profilé permet d'extraire facilement de la rainure (54) l'échantillon prélevé, par exemple par déclipsage de cet élément profilé.

Le bloc burineur / outil rotatif (4) comprend un mandrin (40) prévu pour accueillir et maintenir l'extrémité supérieure du manchon (6). Le mandrin est relié à un outil rotatif (non représenté) compris dans le bloc burineur / outil rotatif (4), qui permet de faire tourner le manchon (6) autour de son axe, l'axe du mandrin (40) étant confondu avec l'axe du dispositif de prélèvement (5), la rotation du manchon entraînant alors la rotation du dispositif de prélèvement (5). Le bloc burineur / outil rotatif (4) comprend également un burineur (non représenté) qui joue un rôle similaire à celui du marteau connu dans l'art antérieur en donnant des coups réguliers sur le dispositif de prélèvement (5) pour l'enfoncer dans le sol ou le matériau à prélever. Le bloc burineur / outil rotatif (4) peut être alimenté électriquement par un fil électrique (41) relié à un moteur (8). L'alimentation du bloc burineur / outil rotatif (4) peut être aussi, en variante, pneumatique, thermique ou hydraulique. L'utilisateur du système selon l'invention peut commander la mise en route du burineur et/ou de l'outil rotatif du bloc burineur / outil rotatif (4) par exemple grâce à des boutons situés sur une poignée (42) dudit bloc (4). De même, le moteur (8) comporte au moins un interrupteur de mise en route / arrêt. Dans une variante de réalisation, le burineur et l'outil rotatif ne font pas partie d'un bloc mais sont indépendants l'un de l'autre.

Le bloc burineur / outil rotatif (4) comporte de préférence un capot dans lequel sont enfermés l'extrémité supérieure du mandrin (40), l'outil rotatif et le burineur. La partie du capot enfermant l'extrémité supérieure du mandrin (40) est introduite dans la bague (31) du dispositif de support (3), de façon à ce que l'axe du mandrin (40) soit vertical. Le capot du bloc burineur /outil rotatif (4) comporte un épaulement (43) au-dessus de sa partie enfermant l'extrémité supérieure du mandrin (40), cet épaulement prenant appui sur les bords de la bague (31) du dispositif de support (3).

Lorsque le système selon l'invention est prêt à utiliser ou en cours d'utilisation, la plaque (12) de la potence (1) est positionnée à proximité immédiate du sol ou matériau à prélever. Lorsque le dispositif de prélèvement (5) n'est pas utilisé, le dispositif de support (3) est remonté suffisamment le long de la crémaillère pour que l'extrémité inférieure de la tête (51) du dispositif de prélèvement ne soit pas située en-dessous de la surface inférieure de la plaque (12) de la potence (1). Cette position correspond par exemple à une position pour laquelle le dispositif de support (3) est situé contre les barres horizontales (11) de la potence (1), comme représenté sur les figures 1 et 2.

Le système selon l'invention est de préférence fixé sur un véhicule (9) pour faciliter son transport. Le véhicule (9) est, par exemple, mais de façon non limitative, un quad ou un chariot de golf. Le véhicule (9) comporte au moins un châssis (90), supporté par des roues (91) ou des patins, ainsi qu'un système d'actionnement et de commande du véhicule tel que, par exemple, un moteur, un volant, des moyens d'accélérer et de freiner, des moyens de le diriger, etc... Une armature (92), par exemple tubulaire, de support du système selon l'invention est fixée sur le châssis (90) du véhicule (9). Une barre (93), inclinée par rapport à la verticale, est fixée à ladite armature (92), sensiblement dans l'alignement de la potence (1), de la crémaillère (2) et du dispositif de prélèvement (5). Un arbre (94) sensiblement horizontal est fixé à l'extrémité inférieure de cette barre inclinée (93). Une barre (15) munie d'un perçage traversant, fixée perpendiculairement à la barre verticale (10) de la potence (1), par exemple en y étant soudée, peut pivoter librement autour de cet arbre (94), dans le plan de symétrie de la potence (1) et de la crémaillère (2), ce qui permet au système selon l'invention d'être incliné par rapport à la verticale pour son transport. La barre inclinée (93) du véhicule (9) comporte, à son extrémité supérieure, une butée (95) contre laquelle le système selon l'invention vient s'appuyer pour prendre une inclinaison sensiblement parallèle à ladite barre inclinée (93). Un système de fixation (96) du système selon l'invention est fixé à l'extrémité libre de cette butée (96) pour maintenir le système selon l'invention dans sa position inclinée pendant son transport. Dans un mode de réalisation préféré de l'invention, le système selon l'invention est muni d'une poignée (16) fixée sur la potence, par exemple en y étant soudée, ladite poignée facilitant le basculement, par un utilisateur, du système selon l'invention entre sa position verticale d'utilisation et sa position inclinée de transport. Le système selon l'invention est par exemple relié à la butée (95) de la barre inclinée (93) du véhicule par une chaîne (17) disposée entre la barre verticale (10) de la potence (1) et ladite butée (95).

Un dispositif (97) de support d'au moins un récipient (98) de recueil des prélèvements d'échantillons est de préférence fixé sur le châssis (90) du véhicule (9). De même, le moteur (8) ou la centrale hydraulique alimentant le bloc burineur / outil rotatif (4) est fixé sur le châssis (90) du véhicule (9).

Le dispositif de prélèvement (5) peut facilement être démonté du système selon l'invention pour être changé en fonction du type de sol ou de matériau à prélever. Ainsi, l'utilisateur du système selon l'invention peut choisir un dispositif de prélèvement dont le diamètre de la tige ou encore l'importance de la lèvre de raclage seront adaptés à l'utilisation souhaitée.

Le procédé de mise en oeuvre du système selon l'invention va maintenant être décrit. Le système selon l'invention est d'abord amené à proximité du lieu sur lequel des prélèvements d'échantillons doivent être effectués, par exemple à l'aide du véhicule (9) décrit plus haut. Le système selon l'invention est ensuite basculé de sa position inclinée vers sa position verticale par l'utilisateur qui s'aide pour cela de la poignée (16), après avoir déverrouillé le système de fixation (96) du véhicule (9). L'éventuel changement de dispositif de prélèvement (5) et/ou de tête (51) doit être effectué avant le basculement. Le moteur (8) du système selon l'invention est alors mis en marche par l'utilisateur. Ce dernier met ensuite en marche le burineur du bloc burineur / outil rotatif (4) pour enfoncer le dispositif de prélèvement dans le sol ou le matériau à prélever. Sous l'effet du burineur, qui vient frapper par à-coups sur le dispositif de prélèvement (5) et sur la bague (31) du dispositif de support (3), le dispositif de prélèvement (5) s'enfonce dans le sol tandis que le dispositif de support (3) descend le long de la crémaillère (2). Une fois que la rainure (54) de la tige (50) du dispositif de prélèvement (5) est complètement enfoncée dans le sol ou dès que le dispositif de prélèvement (5) ne peut plus progresser dans le sol s'il bute par exemple sur des cailloux, l'utilisateur stoppe le burineur. Il met alors en marche l'outil rotatif du bloc burineur / outil rotatif (4) pour faire tourner le dispositif de prélèvement dans le sol ou le matériau à prélever, de façon à prélever des échantillons grâce à la lèvre de raclage (55) et à les recueillir dans la rainure (54). Après un nombre déterminé de tours, par exemple au nombre de 10, l'utilisateur stoppe l'outil rotatif. Il actionne alors la manivelle (30) ou un moteur dédié du dispositif de support (3) pour remonter ce dernier le long de la crémaillère (2), ce qui entraîne simultanément la remontée du dispositif de prélèvement (5) grâce à la plaque (32) fixée sur le dispositif de support (3). L'utilisateur peut stopper son mouvement dès que l'extrémité inférieure de la tête (51) du dispositif de prélèvement est située en dessous de la surface inférieure de la plaque (12) de la potence (1). L'utilisateur peut ensuite racler une partie de la terre prélevée pour enlever les contaminations éventuelles ayant pu se produire pendant la remontée. Dans un mode de réalisation, le système selon l'invention peut ensuite être basculé de nouveau dans sa position inclinée. Puis l'utilisateur peut extraire le prélèvement effectué de la rainure (54) à l'aide d'un outil adapté et le stocker dans un récipient (98) prévu à cet effet. Le système de fixation (96) peut alors être verrouillé si le système selon l'invention doit à nouveau être transporté, par exemple pour effectuer un autre prélèvement.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système convenant pour utiliser un dispositif de prélèvement (5) d'échantillons dans un sol ou un matériau de constitution granuleuse ou pulvérulente, ledit dispositif (5) comprenant une tige verticale (50) dont une rainure (54) permet de recueillir le prélèvement, sur le bord de laquelle est formée une lèvre de raclage (55) du sol ou du matériau à prélever, système dans lequel au moins un premier système motorisé est prévu pour entraîner la descente du dispositif de prélèvement (5) dans le sol ou le matériau à prélever, **caractérisé en ce qu'**il comprend :
- des moyens de guidage vertical (31, 320) du dispositif de prélèvement (5) lors de cette descente, laissant un degré de liberté en rotation à la tige autour de son axe ; et
- un second système motorisé pour entraîner la rotation du dispositif de prélèvement (5) dans le sol ou le matériau à prélever permettant le raclage du sol ou matériau à prélever par la lèvre de raclage (55) du dispositif de prélèvement (5) et le recueil du sol ou matériau raclé dans la rainure (54) du dispositif de prélèvement (5),
lesdits premier et second systèmes motorisés étant prévus au-dessus de la tige (50).

2. Système selon la revendication 1, comprenant :
- une potence (1) dotée à une extrémité inférieure d'une plaque (12) formant base au sol, un perçage étant prévu dans la plaque (12) pour réaliser un guidage vertical à un niveau inférieur d'une extrémité de la tige (50) du dispositif de prélèvement (5) ; et
- un dispositif (3) de support déplaçable par rapport à la plaque (12) le long de la potence (1) et doté de moyens (31, 32, 320) pour réaliser un guidage vertical à un niveau supérieur du dispositif de prélèvement (5) lors de ladite descente.

3. Système selon la revendication 1 ou 2, comportant des moyens de guidage vertical (31, 320) du dispositif de prélèvement (5) constitués de trois éléments :
- une bague (31) d'un dispositif (3) de support des systèmes motorisés de descente et de rotation du dispositif de prélèvement (5, ledit dispositif de support (3) étant monté coulissant sur un organe d'entraînement du type crémaillère (2) ou treuil maintenu sensiblement vertical par une potence (1),
- un perçage (320) traversant une plaque (32) sensiblement horizontale de support du dispositif de prélèvement (5), ladite plaque (32) étant fixée au dispositif de support (3),
- un perçage traversant une plaque (12) sensiblement horizontale fixée à l'extrémité inférieure de la potence (1).

4. Système selon la revendication 3, **caractérisé en ce que** le dispositif de support (3) comprend un pignon qui coopère avec une pluralité de dents (21) de la crémaillère (2), ledit pignon étant relié à une manivelle (30) dont l'actionnement permet de remonter manuellement ou avec un système mécanique de type perceuse le dispositif de support (3) le long de la crémaillère (2), cette remontée entraînant la remontée du dispositif de prélèvement (5) grâce à la plaque (32) de support du dispositif de prélèvement (5).

5. Système selon la revendication3 ou 4, **caractérisé en ce que** le système motorisé de rotation du dispositif de prélèvement (5) est relié à un mandrin (40) maintenant la partie supérieure d'un manchon (6), la partie inférieure dudit manchon (6) coopérant avec la partie supérieure du dispositif de prélèvement (5) pour l'entraîner en rotation.

6. Système selon la revendication 5, **caractérisé en ce que** la partie inférieure du manchon (6) est de forme complémentaire à un évidement non cylindrique réalisé dans un élément femelle (53) fixé au-dessus de la tige (50) du dispositif de prélèvement (5).

7. Système selon la revendication 5, **caractérisé en ce que** la partie inférieure du manchon (6) est un élément femelle dans lequel est réalisé un évidement non cylindrique de forme complémentaire à la partie supérieure du dispositif de prélèvement (5).

8. Système selon une des revendications 3 à 7, **caractérisé en ce que** le système motorisé de descente du dispositif de prélèvement (5) dans le sol ou le matériau à prélever est un burineur, le dispositif de prélèvement (5) étant muni à son extrémité supérieure d'un élément d'amortissement, le second système motorisé étant agencé pour entraîner la rotation du dispositif de prélèvement (5) indépendamment de la descente.

9. Système selon une des revendications 3 à 8, **caractérisé en ce que** le système motorisé de descente du dispositif de prélèvement (5) et le système motorisé de rotation du dispositif de prélèvement (5) sont enfermés dans un capot muni d'un épaulement (43) prenant appui sur la bague (31) du dispositif de support (3).

10. Système selon une des revendications 3 à 9, **caractérisé en ce qu'**il est fixé à un véhicule (9) pour faciliter son transport, la potence (1) comportant une barre (15) montée libre en rotation sur un arbre (94) sensiblement horizontal du véhicule (9), permettant de faire pivoter le système autour de cet arbre (94) entre une position verticale et une position inclinée.

11. Système selon la revendication 10, **caractérisé en ce que** la position inclinée du système est définie par une butée (95), le système étant bloqué dans cette position grâce à un système de fixation (96).

12. Système selon la revendication 10 ou 11, **caractérisé en ce qu'**il comprend une poignée (16) facilitant le basculement du système par un utilisateur entre les positions verticale et inclinée.

13. Procédé de mise en oeuvre du système selon une des revendications 1 à 12, **caractérisé en ce qu'**il comprend au moins les étapes suivantes :
- positionnement vertical du système à l'endroit où un prélèvement doit être effectué,
- descente verticale du dispositif de prélèvement (5) dans le sol ou le matériau à prélever grâce au système motorisé de descente du dispositif de prélèvement (5), au maximum jusqu'à ce que la rainure (54) de la tige (50) du dispositif de prélèvement (5) soit complètement enfoncée dans le sol ou matériau, un maintien vertical étant assuré par des moyens de guidage vertical (31, 320) du système à la fois au ras du sol et à un niveau supérieur,
- après la descente, rotation du dispositif de prélèvement (5) grâce au système motorisé de rotation du dispositif de prélèvement (5), de façon à prélever des échantillons grâce à la lèvre de raclage (55) et à les recueillir dans la rainure (54) du dispositif de prélèvement (5),
- remontée du dispositif de prélèvement (5) par actionnement d'une manivelle (30) ou dispositif mécanique équivalent jusqu'à ce que la tête (51) du dispositif de prélèvement soit entièrement sortie du sol ou matériau,
- extraction du prélèvement effectué de la rainure (54) à l'aide d'un outil adapté et stockage dans un récipient (98) prévu à cet effet.

14. Procédé selon la revendication 13, **caractérisé en ce que** l'étape de positionnement vertical du système consiste à basculer ce dernier de sa position inclinée vers sa position verticale, après une étape de déverrouillage du système de fixation (96).

15. Procédé selon la revendication 13 ou 14, **caractérisé en ce que** l'étape d'extraction du prélèvement est précédée d'une étape de basculement du système de sa position verticale vers sa position inclinée.

## Claims

1. System for using a device (5) for taking samples in a soil or granular or powdery material, said device (5) comprising a vertical stem (50), of which a groove (54) collects the sample, on the edge of which a lip (55) is formed for scraping the soil or the material to be sampled, said system being provided with at least a first power-driven system for lowering the sampling device (5) into the soil or the material to be sampled, **characterised in that** it comprises:
- means (31, 320) for vertically guiding the sampling device (5) during the descent, having a rotational degree of freedom at the stem about the axis thereof; and
- a second power-driven system for rotating the sampling device (5) in the soil or material to be sampled, allowing the soil or material to be sampled to be scraped by the scraping lip (55) of the sampling device (5) and the scraped-up soil or material to be collected in the groove (54) of the sampling device (5),
said first and second power-driven systems being provided above the stem (50).

2. System according to claim 1, comprising:
- a bracket (1) fitted at a lower end with a plate (12) forming a base on the soil, a bore being provided in the plate (12) for vertical guidance to a lower level of an end of the stem (50) of the sampling device (5); and
- a supporting device (3) which is displaceable relative to the plate (12) along the bracket (1) and is fitted with means (31, 32, 320) for vertical guidance to a higher level of the sampling device (5) during said descent.

3. System according to either claim 1 or claim 2, comprising means (31, 320) for vertically guiding the sampling device (5) consisting of three elements:
- a ring (31) of a device (3) for supporting the power-driven systems for descending and rotating the sampling device (5), said supporting device (3) being slidingly mounted on a rack-type or winch-type driving member (2) held substantially vertically by a bracket (1),
- a bore (320) passing through a substantially horizontal plate (32) for supporting sampling device (5), said plate (32) being fixed to the supporting device (3),
- a bore passing through a substantially horizontal plate (12) fixed to the lower end of the bracket (1).

4. System according to claim 3, **characterised in that** the supporting device (3) comprises a pinion which cooperates with a plurality of teeth (21) of the rack (2), said pinion being connected to a crank (30), the actuation of which allows the supporting device (3) to be moved upwards along the rack (2), either manually or with a drill-type mechanical system, said upward displacement causing the sampling device (5) to ascend by means of the plate (32) for supporting the sampling device (5).

5. System according to either claim 3 or claim 4, **characterised in that** the power-driven system for rotating the sampling device (5) is connected to a mandrel (40) holding the upper part of a sleeve (6), the lower part of said sleeve (6) cooperating with the upper part of the sampling device (5) so as to drive it in rotation.

6. System according to claim 5, **characterised in that** the lower part of the sleeve (6) is shaped so as to complement a non-cylindrical recess provided in a female element (53) fixed above the stem (50) of the sampling device (5).

7. System according to claim 5, **characterised in that** the lower part of the sleeve (6) is a female element, in which a non-cylindrical recess is shaped so as to complement the upper part of the sampling device (5).

8. System according to any one of claims 3 to 7, **characterised in that** the power-driven system for lowering the sampling device (5) into the soil or the material to be sampled is a chipper, the sampling device (5) being provided at its upper end with a damping element, the second power-driven system being arranged so as to rotate the sampling device (5) independently of the descent.

9. System according to any one of claims 3 to 8, **characterised in that** the power-driven system for lowering the sampling device (5) and the power-driven system for rotating the sampling device (5) are enclosed in a cover provided with a shoulder (43) pressing against the ring (31) of the supporting device (3).

10. System according to any one of claims 3 to 9, **characterised in that** it is fixed to a vehicle (9) for easier transportation, the bracket (1) comprising a bar (15) mounted rotationally freely on a substantially horizontal shaft (94) of the vehicle (9), allowing the system to pivot about said shaft (94) between a vertical position and a tilted position.

11. System according to claim 10, **characterised in that** the tilted position of the system is defined by a stop (95), the system being locked in this position by a fixing system (96).

12. System according to either claim 10 or claim 11, **characterised in that** it comprises a handle (16) facilitating the tilting of the system by a user between the vertical and tilted positions.

13. Method for operating the system according to any one of claims 1 to 12, **characterised in that** it comprises at least the following steps:
- vertically positioning the system at the location where the sampling is to be performed,
- vertically lowering the sampling device (5) into the soil or the material to be sampled by means of a power-driven system for lowering the sampling device (5) as far as possible until the groove (54) of the stem (50) of the sampling device (5) is completely embedded in the soil or material, vertical support being provided both at ground level and at a higher level by vertical guiding means (31, 320) of the system,
- after the descent, rotating the sampling device (5) by means of the power-driven system for rotating the sampling device (5) in order to take samples using the scraping lip (55) and to collect them in the groove (54) of the sampling device (5),
- raising the sampling device (5) by actuating a crank (30) or an equivalent mechanical device until the head (51) of the sampling device is completely removed from the soil or material,
- extracting the collected sample from the groove (54) by means of a suitable tool and storing it in a container (98) provided for this purpose.

14. Method according to claim 13, **characterised in that** the step of vertically positioning the system consists of tilting said system from its tilted position to its vertical position after a step of unlocking the fixing system (96).

15. Method according to either claim 13 or claim 14, **characterised in that** the step of extracting the collected sample is preceded by a step of tilting the system from its vertical position to its tilted position.

## Patentansprüche

1. System, das geeignet ist zum Verwenden einer Vorrichtung (5) zum Entnehmen von Proben in einem Boden oder einem Material körniger oder pulverartiger Ausbildung, wobei die Vorrichtung (5) einen vertikalen Schaft (50) aufweist, von dem eine Einkerbung (54) das Aufnehmen der Probe erlaubt, auf deren Rand eine Kante (55) zum Schaben des Bodens oder des zu entnehmenden Materials ausgebildet ist, wobei in dem System mindestens ein erstes motorisiertes System zum Bewirken des Versenkens der Entnahmevorrichtung (5) im Boden oder dem zu entnehmenden Material vorgesehen ist, **dadurch gekennzeichnet, dass** es aufweist:
- Mittel zur vertikalen Führung (31, 320) der Entnahmevorrichtung (5) während des Versenkens, die dem Schaft einen Rotations-Freiheitsgrad um seine Achse lassen, und
- ein zweites motorisiertes System zum Antreiben der Rotation der Entnahmevorrichtung (5) im Boden oder dem zu entnehmenden Material, das das Abschaben des Bodens oder des zu entnehmenden Materials durch die Schabkante (55) der Entnahmevorrichtung (5) und das Aufnehmen des abgeschabten Bodens oder Materials in der Einkerbung (54) der Entnahmevorrichtung (5) erlaubt,
wobei das erste und das zweite motorisierte System über dem Schaft (50) vorgesehen sind.

2. System gemäß Anspruch 1, aufweisend:
- einen Träger (1), der an einem unteren Ende mit einer Platte (12) versehen ist, die am Boden eine Basis bildet, wobei in der Platte (12) eine Bohrung vorgesehen ist, um auf einem Niveau unter einem Ende des Schaftes (50) der Entnahmevorrichtung (5) eine vertikale Führung zu realisieren, und
- eine Haltevorrichtung (3), die relativ zu der Platte (12) entlang dem Träger (1) verlagerbar ist, und die mit Mitteln (31, 32, 320) zum Realisieren einer vertikalen Führung auf einem Niveau über der Entnahmevorrichtung (5) während des Versenkens versehen ist.

3. System gemäß Anspruch 1 oder 2, das Mittel zum vertikalen Führen (31, 320) der Entnahmevorrichtung (5) aufweist, die aus drei Elementen gebildet sind:
- einem Ring (31) einer Haltevorrichtung (3) der motorisierten Systeme zum Versenken und Rotieren der Entnahmevorrichtung (5), wobei die Haltevorrichtung (3) auf einem Antriebsmittel des Typs einer Zahnstange (2) oder einer Winde gleitend gelagert ist, das von einem Träger (1) im Wesentlichen vertikal gehalten wird,
- einer Bohrung (320), die durch eine im Wesentlichen horizontale Platte (12) zum Halten der Entnahmevorrichtung (5) hindurchgeht, wobei die Platte (32) an der Haltevorrichtung (3) befestigt ist,
- einer Bohrung, die durch eine im Wesentlichen horizontale Platte (12) hindurchgeht, die am unteren Ende des Trägers (1) befestigt ist.

4. System gemäß Anspruch 3, **dadurch gekennzeichnet, dass** die Haltevorrichtung (3) ein Ritzel aufweist, das mit einer Mehrzahl von Zähnen (21) der Zahnstange (2) zusammenwirkt, wobei das Ritzel mit einer Kurbel (30) verbunden ist, deren Betätigung erlaubt, die Haltevorrichtung (3) entlang der Zahnstange (2) manuell oder mit einem mechanischen System des Bohrmaschinentyps anzuheben, wobei dieses Anheben dank der Platte (32) zum Halten der Entnahmevorrichtung (5) das Anheben der Entnahmevorrichtung (5) bewirkt.

5. System gemäß Anspruch 3 oder 4, **dadurch gekennzeichnet, dass** das motorisierte System zum Rotieren der Entnahmevorrichtung (5) mit einem Dorn (40) verbunden ist, der den oberen Teil einer Muffe (6) hält, wobei der untere Teil der Muffe (6) mit dem oberen Teil der Entnahmevorrichtung (5) zusammenwirkt, um diese zum Rotieren anzutreiben.

6. System gemäß Anspruch 5, **dadurch gekennzeichnet, dass** der untere Teil der Muffe (6) eine Form aufweist, die komplementär zu einer nicht zylinderförmigen Aussparung ist, die in einem weiblichen Element (53) realisiert ist, das über dem Schaft (50) der Entnahmevorrichtung (5) angebracht ist.

7. System gemäß Anspruch 5, **dadurch gekennzeichnet, dass** der untere Teil der Muffe (6) ein weibliches Element ist, in welchem eine nicht zylinderförmige Aussparung realisiert ist, deren Form komplementär zu dem oberen Teil der Entnahmevorrichtung (5) ist.

8. System gemäß einem der Ansprüche 3 bis 7, **dadurch gekennzeichnet, dass** das motorisierte System zum Versenken der Entnahmevorrichtung (5) im Boden oder dem zu entnehmenden Material ein Meißel ist, wobei die Entnahmevorrichtung (5) an ihrem oberen Ende mit einem Dämpfungselement versehen ist, wobei das zweite motorisierte System zum Antreiben der Rotation der Entnahmevorrichtung (5) unabhängig vom Versenken eingerichtet ist.

9. System gemäß einem der Ansprüche 3 bis 8, **dadurch gekennzeichnet, dass** das motorisierte System zum Versenken der Entnahmevorrichtung (5) und das motorisierte System zum Rotieren der Entnahmevorrichtung (5) in einer Verkleidung eingeschlossen sind, die einen Vorsprung (43) aufweist, der auf dem Ring (31) der Haltevorrichtung (3) aufliegt.

10. System gemäß einem der Ansprüche 3 bis 9, **dadurch gekennzeichnet, dass** es an einem Fahrzeug (9) angebracht ist, um seinen Transport zu erleichtern, wobei der Träger (1) eine Stange (15) aufweist, die frei drehbar auf einer Welle (94) im Wesentlichen horizontal zu dem Fahrzeug (9) angeordnet ist, wodurch ein Schwenken des Systems um diese Welle (94) zwischen einer vertikalen Position und einer geneigten Position erlaubt wird.

11. System gemäß Anspruch 10, **dadurch gekennzeichnet, dass** die geneigte Position des Systems durch einen Anschlag (95) definiert ist, wobei das System dank einem Halterungssystem (96) in dieser Position blockiert wird.

12. System gemäß Anspruch 10 oder 11, **dadurch gekennzeichnet, dass** es einen Griff (16) aufweist, der das Umschwenken des Systems durch einen Benutzer zwischen der vertikalen Position und der geneigten Position erleichtert.

13. Verfahren zum Durchführen des Systems gemäß einem der Ansprüche 1 bis 12, **dadurch gekennzeichnet, dass** es mindestens die folgenden Schritte aufweist:
- vertikale Positionierung des Systems in dem Bereich, wo eine Entnahme durchgeführt werden muss,
- vertikales Versenken der Entnahmevorrichtung (5) im Boden oder dem zu entnehmenden Material dank dem motorisierten System zum Versenken der Entnahmevorrichtung (5), maximal bis die Einkerbung (54) des Schaftes (50) der Entnahmevorrichtung (5) vollständig im Boden oder dem Material versenkt ist, wobei ein vertikales Halten durch Mittel zum vertikalen Führen (31, 320) des Systems gleichzeitig dicht über dem Boden und auf einem höheren Niveau sichergestellt wird,
- nach dem Versenken, Rotation der Entnahmevorrichtung (5) dank dem motorisierten System zum Rotieren der Entnahmevorrichtung (5), so dass Proben dank der Schabkante (55) entnommen und in der Einkerbung (54) der Entnahmevorrichtung (5) aufgenommen werden,
- Anheben der Entnahmevorrichtung (5) durch Betätigung einer Kurbel (30) oder einer äquivalenten mechanischen Vorrichtung, bis der Kopf (51) der Entnahmevorrichtung den Boden oder das Material vollständig verlassen hat,
- Extrahieren der durchgeführten Entnahme aus der Einkerbung (54) mit Hilfe eines angepassten Werkzeugs und Lagern in einem für diesen Zweck vorgesehenen Behälter (98).

14. Verfahren gemäß Anspruch 13, **dadurch gekennzeichnet, dass** der Schritt des vertikalen Positionierens des Systems aus dem Umschwenken des letzteren aus seiner geneigten Position in seine vertikale Position besteht, nach einem Schritt des Entriegelns des Befestigungssystems (96).

15. Verfahren gemäß Anspruch 13 oder 14, **dadurch gekennzeichnet, dass** dem Schritt des Extrahierens der Entnahme ein Schritt des Umschwenkens des Systems aus seiner vertikalen Position in seine geneigte Position vorausgeht.
